Europäisches Patentamt

European Patent Office

Office européen des brevets

(11) Publication number: **0 083 711**
**B1**

(19)

(12) **EUROPEAN PATENT SPECIFICATION**

(45) Date of publication of patent specification: **15.10.86**

(21) Application number: **82110617.6**

(22) Date of filing: **18.11.82**

(51) Int. Cl.⁴: **H 02 K 15/06**

(54) **Coil inserting apparatus.**

(30) Priority: **20.11.81 JP 187533/81**

(43) Date of publication of application:
**20.07.83 Bulletin 83/29**

(45) Publication of the grant of the patent:
**15.10.86 Bulletin 86/42**

(84) Designated Contracting States:
**DE FR GB**

(56) References cited:
**EP-A-0 052 852**
**DD-A- 111 498**
**DE-A-2 062 153**
**GB-A-2 033 792**
**US-A-4 047 293**

(73) Proprietor: **Matsushita Electric Industrial Co.,
Ltd.**
**1006, Oaza Kadoma**
**Kadoma-shi Osaka-fu, 571 (JP)**

(72) Inventor: **Hamane, Tokuhito**
**16-19, Nagaotanimachi 3-chome**
**Hirakata-shi Osaka-fu 573-01 (JP)**
Inventor: **Tasai, Masaaki**
**46-4-307 Yamadaikehigashimachi**
**Hirakata-shi Osaka-fu 573-01 (JP)**
Inventor: **Kubota, Tadashi**
**5-4, Myokenzaka 4-chome**
**Katano-shi Osaka-fu 576 (JP)**

(74) Representative: **Eisenführ & Speiser**
**Martinistrasse 24**
**D-2800 Bremen 1 (DE)**

Courier Press, Leamington Spa, England.

## Description

The present invention relates to a coil inserting apparatus for inserting coils into slots of a stator core of an electric rotary machine, comprising:

a) a plurality of groups of blades for guiding the coils into the slots, which are provided in a circular array such that each blade is spaced a predetermined distance from adjacent blades;
b) a plurality of blade holder, one for each group of said blades, each group of said blades being movable in an axial direction of said blade holders;
c) a coil pusher which is adapted to be moved in the axial direction of said blade holders so as to drive the coils into the slots such that said coil pusher is guided by the groups of said blades;
d) driving means for driving said coil pusher and said blade holders.

Conventionally, there has been proposed a variety of different coil inserting apparatuses.

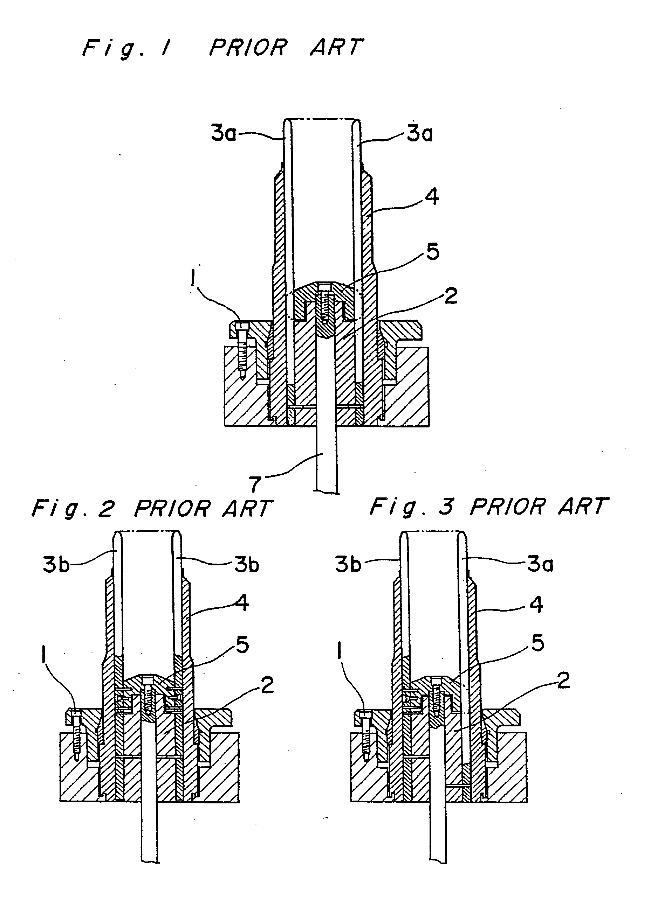

US—A—3,324,536 discloses a coil inserting apparatus of a fixed blade type, in which all blades are secured to a blade holder (see Figure 1). In coil insertion apparatuses of this type the coil tends to be damaged during insertion thereof into a stator core due to a large frictional resistance between the blades and the coil, and moreover, diameters of wires for coils applicable to the apparatus are limited to a large extent.

US—A—2,432,267 discloses a coil inserting apparatus of a movable blade type, in which all blades are secured to a coil pusher (see Figure 2). Another coil inserting apparatus of the movable blade type is disclosed in US—A—3,559,268. In a coil inserting apparatus of this kind part of the blades are secured to the coil pusher while the remaining blades are fixed and non-movable (see Figure 3). A third variation of the movable blade type is disclosed in DE—A—20 62 153. A coil insertion apparatus according to this type comprises two blade groups where one of the blade groups is attached to the coil pusher and the other one is attached to a movable blade holder. Coil pusher and blade holder can be axially displaced simultaneously. The blade holder with its blades is stopped in a predetermined position by a locking mechanism.

All these coil insertion apparatuses referred to as the movable blade type and having all the blades or part of the blades secured to a coil pusher are advantageous in that the coil insertion resistance may be reduced. It is to be noted here that the coils are prewound into a shape of a closed loop and have two side portions and two end portions connecting said side portions. The coil inserting apparatuses of the movable blade type are disadvantageous in that the coils are required to conform to a specification in which the end portion of the coils are increased in length in advance such that the coils are pushed upwardly in an axial direction of the blade holder.

Since an extremely large force is applied to the movable blades and the coils, the coil inserting apparatuses of the movable blade type cannot be applied to stators having a winding specification in which the coil length is reduced as short as possible and the opposite end portions of the coils are decreased in height so as to obtain compact electric motors etc. accommodating the stators therein.

DD—A—111 498 discloses that some of the blades are mounted on a movable blade holder, while the remaining blades are unmovably fixed. The blade holder is movable with respect to the coil pusher. US—A—4,047,293 discloses a winding insertion device with a pair of blade holders. A first set of blades is attached to one of the blade holders and a second set of blades is attached to the second blade holder such that individual ones of the first and second blade sets are arranged alternately with respect to one another. The first and second blade holders are movably guided relative to each other. Alternate ones of the blades oszillate 180° out of phase with one another. Coil inserting apparatuses according to these both specifications are not able to deal with coils having different specifications. Thus, in the case where two kinds of coils, one having a small insertion resistance force and the other having a large insertion resistance force, are required to be properly inserted into the slots of the same stator core, it is necessary to employ two different kinds of coil inserting apparatuses.

Moreover, in the known coil inserting apparatuses a long time period is required for change over to respective stack heights. In the case where stator cores having different stack heights are to be handled, some bolts are loosened, the blade holder is pushed upwardly or downwardly such that a distance between upper ends of the blades and upper ends of wedge guides is set to a value of each of the stack heights plus a certain allowance and finally, the bolts are tightened, thus requiring tedious and time-taking operations.

Accordingly, the object of the present invention is to provide a coil inserting apparatus suitable for respective winding specifications of stators. The coil inserting apparatus should be simple in construction and stable in function at high reliability and should be applicable to stators having different sizes.

According to the present invention, as claimed in Claim 1 for France, this object is accomplished in that said groups of blades are movable independently of each other; said driving means of said coil pusher and of said blade holders are independent of each other and are rotary driving means; a mechanism for converting a rotary motion into a linear reciprocating motion is provided, said mechanism causing said coil pusher and said blade holders to make linear reciprocating motions.

A coil inserting apparatus of this kind is disclosed in EP—A1—0 052 852 which was published after the priority data of the present application, however, which was filed prior to said date when having regard to the designation of Germany and United Kingdom also designated in the present application. Thus, the present application falls under article 54(3) and (4) in these states.

It should be noted that at the time when an approximately half portion of each of the coils is inserted into each of the slots of the stator core, the largest force is required for inserting the coils into the slots of the stator core. This causes a reaction force applied to the coils and to the coil pusher which may cause damage. Thus, it is a further object of the present invention to prevent damages caused by said reaction force.

This further object is accomplished according to Claim 1 for Germany and United Kingdom by a plurality of wedge guides, one for each of said blades, for holding said blades, said wedge guides surrounding said blades; a housing for receiving the coils therein, which is provided so as to be fitted around said wedge guides; and a driving means for driving said housing in the axial direction of said blade holders; said housing being moved upward faster than said coil pusher at the time when an approximately half portion of each of the coils is inserted into each of the slots of the stator core.

In accordance with the present invention, since the coil pusher and the first blade holder and the second blade holder are driven by the rotary driving means which can be controlled easily, speed of the coil pusher and the blades can be set to an optimum value for inserting the coils into the slots of the stator core in the coil inserting process.

Furthermore, in accordance with the present invention, since the rotary driving means for the coil pusher, first blade holder and second blade holder, and the mechanism for converting the rotary motion into the linear motion are employed in the coil inserting apparatus, the overall length of the coil inserting apparatus can be decreased to a minimum.

Moreover, in accordance with one embodiment of the present invention, since the shaft for driving the coil pusher, the first hollow shaft for driving the first group blades and the second hollow shaft for driving the second group blades have a common axis substantially, the coil inserting apparatus can be applied to coil pushers relatively small in size, namely stator cores relatively small in size.

Meanwhile, in accordance with the present invention as claimed in Claim 1 for Germany and United Kingdom, since the lower portions of the coils are pushed upward faster than the coil pusher by the housing at the time when the approximately half portion of each of the coils is inserted into each of the slots of the stator core with the greatest force being required for inserting the coils into the slots, the reaction force applied to the coil pusher and the resistance force against insertion of the coils into the slots are reduced greatly.

The advantages and features of the present invention will become apparent from the following description taken in conjunction with reference to the accompanying drawings, in which:

Fig. 1 shows a coil inserting apparatus according to US—A—3,324,536;

Fig. 2 shows a coil inserting apparatus according to US—A—2,432,267;

Fig. 3 shows a coil inserting apparatus according to US—A—3,559,268;

Fig. 4 shows a coil inserting apparatus according to EP—A1—0 052 852;

Fig. 5 is a front elevational view of a drive unit of a coil inserting apparatus;

Fig. 6 shows a coil inserting jig according to Figure 5 in greater detail;

Fig. 7 is a top plan view of the drive unit of Figure 5; and

Fig. 8 is a view similar to Figure 6 of a preferred modification according to the present invention.

Figs. 1, 2 and 3 are showing different types of prior art coil inserting apparatuses. Bolts 1 are securing a blade holder 2 at the coil inserting apparatus. Fixed blades 3a are secured to the unmovable blade holder 2. In Figs. 2 and 3, movable blades 3b are fixed to a coil pusher 5. In the case where the stator cores have different stack heights, bolts 1 are loosened and the blade holder 2 is pushed upwardly or downwardly such that a distance between upper ends of the blades 3a, 3b of wedge guides 4 is set to a value of each of the stack heights plus a certain allowance.

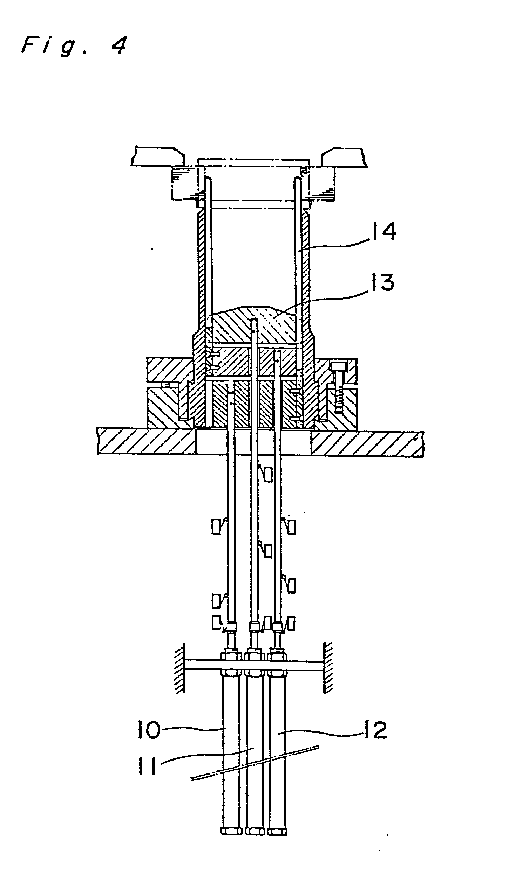

Fig. 4 shows a coil inserting apparatus having cylinders 10, 11 and 12 which act as driving sources and do not have a common axis. In an apparatus of this kind it is difficult to make a delicate control of speed of a coil pusher 13 and of blades 14. The overall length of the coil inserting apparatus becomes considerably large and the application of the apparatus is limited to stators having large sizes to some extent.

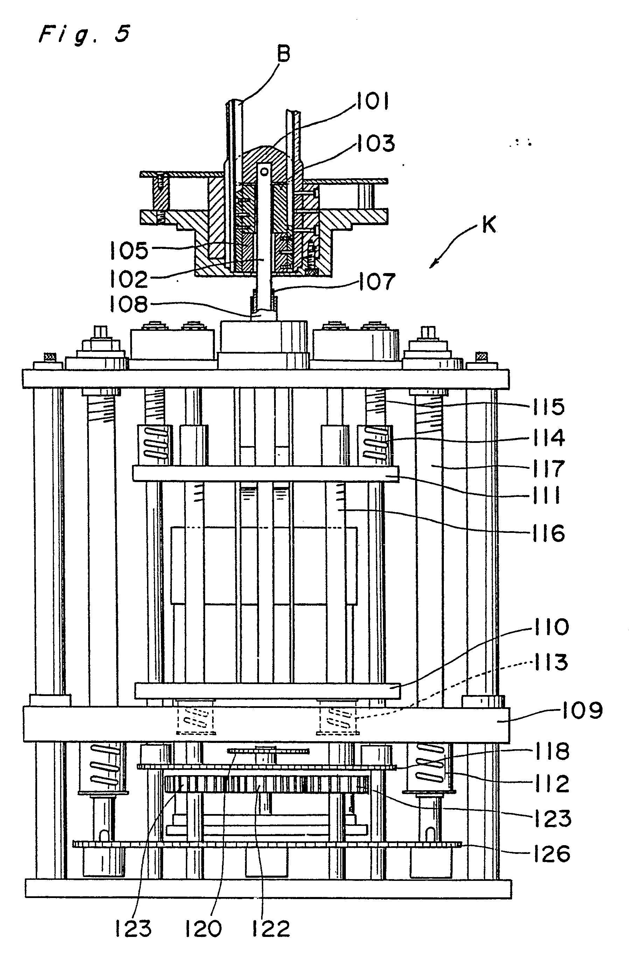

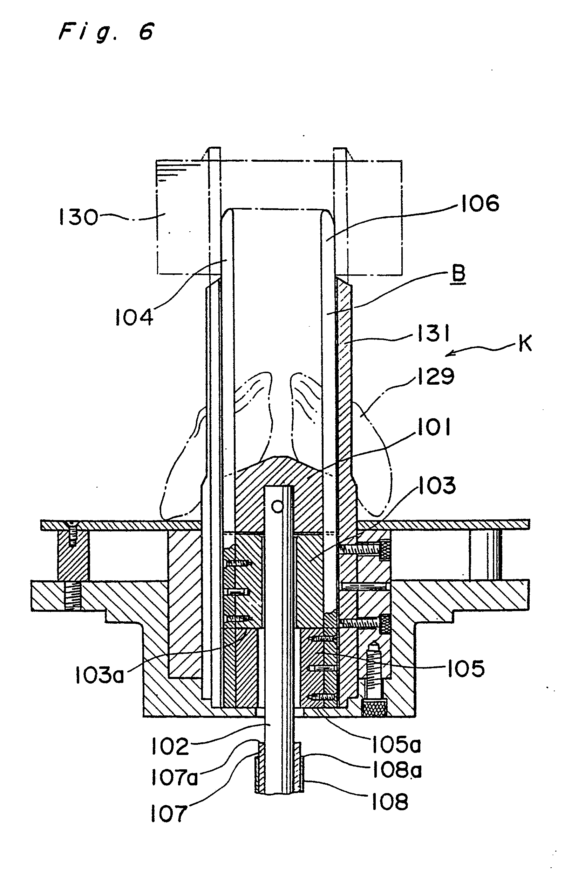

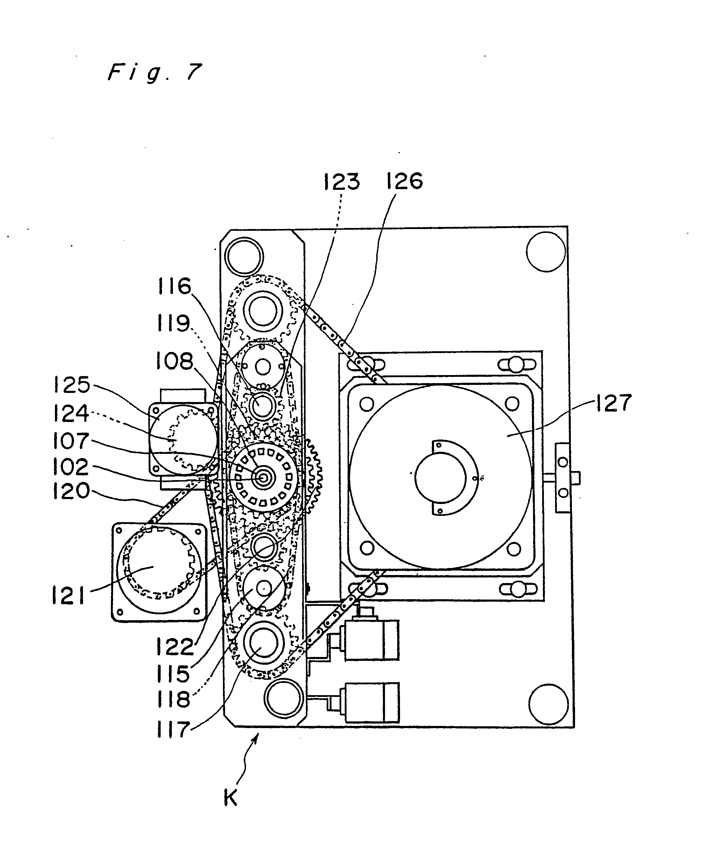

In Figs. 5 to 7, a coil inserting apparatus K according to one preferred embodiment of the present invention is shown. The coil inserting apparatus K includes a coil pusher 101, a shaft 102, a plurality of blades B provided in a circular array, a first blade holder 103, a second blade holder 105, a first hollow shaft 107 and a second hollow shaft 108. The shaft 102 to which the coil pusher 101 is secured is provided at a central axis of the blades B so as to be movable upward and downward. It is to be noted here that all directional indications such as "upward", "downward", etc. relate to the illustrations in Figs. 5 and 6, hereinbelow.

The blades B comprise first group blades 104 and second group blades 106 such that the first group blades 104 and the second group blades 106 are arranged alternately. The first blade holder 103 to which the first group blades 104 are secured is provided below the coil pusher 101, and is formed with a bore fitted around the shaft 102 so as to be slidable upward and downward with respect to the shaft 102. The second blade holder 105 to which the second group blades 106 are secured is provided below the first blade holder 103, and is formed with a bore to permit the shaft 102 to pass therethrough such that the second blade holder 105 is slidable upward and downward with respect to the shaft 102. It is to be noted that the bore diameter of the second blade holder 105 is formed larger than that of the first blade holder 103.

Furthermore, the first hollow shaft 107 is provided below the second blade holder 105 and coaxially with the shaft 102 so as to surround the shaft 102, and is slidable independently of the shaft 102. It is so arranged that, when the first hollow shaft 107 is moved upward, an upper end 107a of the first hollow shaft 107 is caused to pass through the bore of the second blade holder 105 so as to be brought into contact with a lower end 103a of the first blade holder 103 such that the first blade holder 103 is pushed upward. Moreover, the second hollow shaft 108 is provided below the second blade holder 105 and coaxially with the shaft 102 so as to surround the first hollow shaft 107, and is slidable independently of the shaft 102 and the first hollow shaft 107. It should be noted that the bore of the second blade holder 105 permits the first hollow shaft 107 to pass therethrough, but does not permit the second hollow shaft 108 to pass therethrough. Accordingly, when the second hollow shaft 108 is moved upward, an upper end 108a of the second hollow shaft 108 is brought into contact with a lower end 105a of the second blade holder 105 such that the second blade holder 105 is pushed upward.

Moreover, the shaft 102, first hollow shaft 107 and second hollow shaft 108 are, respectively, secured to plates 109, 110 and 111 on which a pair of ball screw nuts 112, a pair of ball screw nuts 113, and a pair of ball screw nuts 114 are fixedly mounted, respectively. A pair of ball screw shafts 117 to be meshed with the pair of the ball screw nuts 112 are provided in parallel with the shaft 102. Likewise, a pair of ball screw shafts 116 to be meshed with the pair of the ball screw nuts 113, and a pair of ball screw shafts 115 to be meshed with the pair of the ball screw nuts 114 are provided in parallel with the shaft 102. Thus, it is so arranged that the shaft 102, first hollow shaft 107 and second hollow shaft 108 are moved upward and downward through rotation of the ball screw shafts 117, 116 and 115, respectively. The ball screw shafts 117 are coupled with a motor 127 through a chain 126 and the ball screw shafts 116 are coupled with a motor 125 through gears 122, 123 and 124. Meanwhile, the ball screw shafts 115 are coupled with a motor 121 through a chain 118, a pair of sprockets 119 and a chain 120. Thus, since the ball screw shafts 117, 116 and 115 can be rotated independently of one another by the motors 127, 125 and 121, respectively, the shaft 102, first hollow shaft 107 and second hollow shaft 108 can be moved upward and downward independently of one another.

Hereinbelow, operations of the coil inserting apparatus K will be described.

Initially, coils 129 are placed between the first group blades 104 and the second group blades 106. Then, a stator core 130 is fitted around the blades B so as to be brought into contact with upper ends of wedge guides 131. Subsequently, a core of the stator core 130 is clamped by a core clamp (not shown).

Then, operations for inserting the coils 129 into slots of the stator core 130 will be described, hereinbelow.

Firstly, the upper end 108a of the second hollow shaft 108 is brought into contact with the lower end 105a of the second blade holder 105. After contact with the second hollow shaft 108, the second blade holder 105 is moved further upward, so that the second group blades 106 and first group blades 104 are moved upward and thus, the second hollow shaft 108 is caused to stop moving upward at the time when the first group blades 104 and second group blades 106 are projected by a proper distance out of the stator core 130. Namely, the second group blades 106 act as the fixed blades in the known coil inserting apparatuses.

Furthermore, the first hollow shaft 107 and shaft 102 are caused to continue moving upward. The first blade holder 103 is pushed upward by the upper end 107a of the first hollow shaft 107. During a time period when the first blade holder 103 is being pushed upward as described above, the first group blades 104 secured to the first blade holder 103 act as the movable blades in the known coil inserting apparatuses and reduces a resistance force applied to the coils 129 in the process for inserting the coils 129 into the slots of the stator core 130.

The first blade holder 103 having the first group blades 104 secured thereto can be operated arbitrarily, provided that the first blade holder 103 satisfies conditions that the first blade holder 103 is disposed below the coil pusher 101 and above the second blade holder 105.

After the coil pusher 101 is pushed upward by the shaft 102 until the coils 129 have been inserted into the slots of the stator core 130 completely, the shaft 102 is caused to stop moving upward.

Subsequently, operations for moving the coil pusher 101, first blade holder 103 and second blade holder 105 after completion of the coil insertion will be described, hereinbelow.

The shaft 102, first hollow shaft 107 and second hollow shaft 108 which have driven the coil pusher 102, first blade holder 103 and second blade holder 105 upward to their upper limits, respectively are moved downward. Since the first group blades 104 and second group blades 106 are held in close contact with the wedge guides 131 at this time, it is difficult to lower the first blade holder 103 and second blade holder 105 by their own weights after the first hollow shaft 107 and second hollow shaft 108 have been lowered. Accordingly, the first blade holder 103 and second blade holder 105 are depressed downward sequentially by the coil pusher 101 secured to the shaft 102 and thus, the coil pusher 102, first blade holder 103 and second blade holder 105 are returned to their initial predetermined positions.

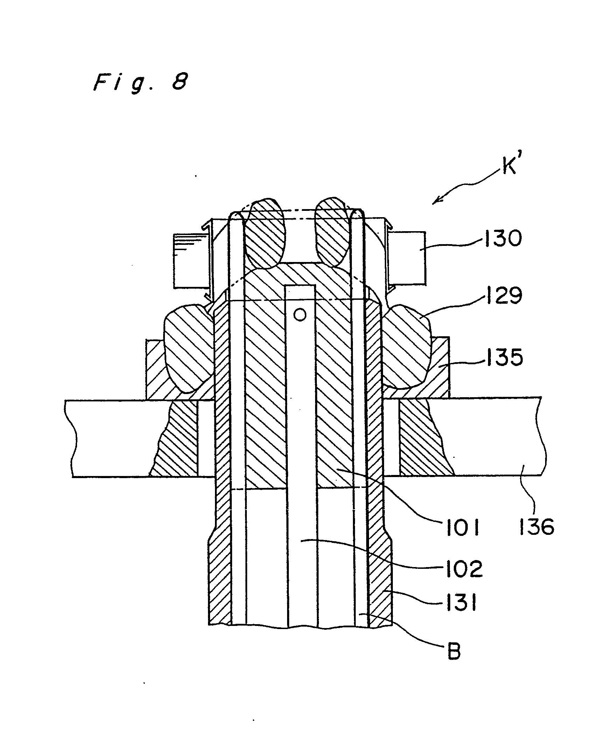

Referring now to Fig. 8, there is shown a coil inserting apparatus K' which is a modification of the coil inserting apparatus K. The coil inserting apparatus K' includes a housing 135 for receiving the coils 129 therein and a plate 136 to which the housing 135 is secured. The plate 136 is formed with an opening to permit the wedge guides 131 to pass therethrough and is moved upward and downward by a driving member (not shown). The housing 135 is fitted around the wedge guides 131 so as to be slidable upward and downward. It should be noted that, at the time when an approximately half portion of each of the coils 129 is inserted into each of the slots of the stator core 130, the largest force is required for inserting the coils into the slots of the stator core 130. In the coil inserting apparatus K', it is so arranged that, at this time, the plate 136, i.e., the housing 135 is moved upward faster than the coil pusher 101 so as to push lower portions of the coils 129 upward such that a reaction force applied to the coil pusher 101 is reduced greatly.

## Claim for the Contracting States: DE, GB

A coil inserting apparatus (K, K') for inserting coils (129) into slots of a stator core (130) of an electric rotary machine, comprising:

a) a plurality of groups of blades (104, 106) for guiding the coils (129) into the slots, which are provided in a circular array such that each blade is spaced a predetermined distance from adjacent blades;

b) a plurality of blade holders (103, 105), one for each group of said blades (104, 106), each group of said blades being movable in an axial direction of said blade holders (103, 105);

c) a coil pusher (101) which is adapted to be moved in the axial direction of said blade holders (103, 105) so as to drive the coils (129) into the slots such that said coil pusher (101) is guided by the groups of said blades (104, 106);

d) driving means for driving said coil pusher (101) and said blade holders (103, 105);

e) said groups of blades (104, 106) are movable independently of each other;

f) said driving means of said coil pusher (101) and of said blade holders (103, 105) are independent of each other and are rotary driving means;

g) a mechanism for converting a rotary motion into a linear reciprocating motion is provided, said mechanism causing said coil pusher (101) and said blade holders (103, 105) to make linear reciprocating motions.

h) a plurality of wedge guides (131), one for each of said blades (104, 106) for holding said blades (104, 106), said wedge guides (131) surrounding said blades (104, 106);

i) a housing (135) for receiving the coils (129) therein, which is provided so as to be fitted around said wedge guides (131); and

j) a driving means for driving said housing (135) in the axial direction of said blade holders (103, 105);

k) said housing (135) being moved upward faster than said coil pusher (101) at the time when an approximately half portion of each of the coils (129) is inserted into each of the slots of the stator core (130).

## Claims for the Contracting State: FR

1. A coil inserting apparatus (K, K') for inserting coils (129) into slots of a stator core (130) of an electric rotary machine, comprising:

a) a plurality of groups of blades (104, 106) for guiding the coils (129) into the slots, which are provided in a circular array such that each blade is spaced a predetermined distance from adjacent blades;

b) a plurality of blade holders (103, 105), one for each group of said blades (104, 106), each group of said blades being movable in an axial direction of said blade holders (103, 105);

c) a coil pusher (101) which is adapted to be moved in the axial direction of said blade holders (103, 105) so as to drive the coils (129) into the slots such that said coil pusher (101) is guided by the groups of said blades (104, 106);

d) driving means for driving said coil pusher (101) and said blade holders (103, 105); characterized in that

e) said groups of blades (104, 106) are movable independently of each other;

f) said driving means of said coil pusher (101) and of said blade holders (103, 105) are independent of each other and are rotary driving means;

g) a mechanism for converting a rotary motion into a linear reciprocating motion is provided, said mechanism causing said coil pusher (101) and said blade holders (103, 105) to make linear reciprocating motions.

2. A coil inserting apparatus according to claim 1, characterized in that

a) the plurality of said blade holders (103, 105) are a first blade holder (103) for the first group of said blades (104) and a second blade holder (105) for the second group of said blades (106) with said first blade holder (103) being disposed above said second blade holder (105);

b) a driving shaft (102) is coupled with said coil pusher (101);

c) a first hollow driving shaft (107) for said first blade holder (103) is coaxially surrounding said driving shaft (102);

d) a second hollow driving shaft (108) for said second blade holder (105) is coaxially surrounding said first hollow driving shaft (107);

e) said second blade holder (105) being formed with a bore which permits only said first hollow driving shaft (107) to pass therethrough;

f) said first blade holder (103) being formed with a bore which permits only said driving shaft (102) to pass therethrough;

whereby said coil pusher (101), said first blade holder (103) and said second blade holder (105) are pushed upwardly by said driving shaft (102), said first hollow driving shaft (107), and said second hollow driving shaft (108), respectively in the case of lifting thereof and are depressed downwardly by said coil pusher (101) in the case of lowering thereof.

3. A coil inserting apparatus according to claim 1 or 2, characterized in that

a) a plurality of wedge guides (131), one each of said blades (104, 106) for holding said blades (104, 106), are surrounding said blades (104, 106);

b) a housing (135) for receiving the coils (129) therein is fitted around said wedge guides (131);

c) a driving means is provided for driving said housing (135) in the axial direction of said blade holders (103, 105);

d) said housing (135) being moved upward faster than said coil pusher (101) at the time when an approximately half portion of each of the coils (129) is inserted into each of the slots of the stator core (130).

**Patentanspruch für die Vertragsstaaten: DE, GB**

Spulen-Einziehvorrichtung (K, K') zum Einziehen von Spulen (129) in Schlitze eines Statorkernes (130) einer rotierenden, elektrischen Maschine, mit:

a) mehreren zum Einführen der Spulen (129) in die Schlitze dienenden Gruppen von Klingen (104, 106), die Kreisförmig angeordnet sind, so daß jede Klinge in einem vorbestimmten Abstand zu benachbarten Klingen angeordnet ist;

b) mehreren Klingenhaltern (103, 105), von denen einer für jede der Klingengruppen (104, 106) vorgesehen ist, wobei jede Klingengruppe in axialer Richtung der Klingenhalter (103, 105) beweglich ist;

c) einem in axialer Richtung der Klingenhalter (103, 105) beweglichen Spulenschieber (101), der die Spulen (129) in die Schlitze so einschiebt, daß der Spulenschieber (101) durch die Klingengruppen (104, 106) geführt wird;

d) einer Antriebseinrichtung zum Antreiben des Spulenschiebers (101) und der Klingenhalter (103, 105);

e) wobei die Klingengruppen (104, 106) unabhängig voneiander beweglich sind;

f) wobei die Antriebseinrichtung des Spulenschiebers (101) und des Klingenhalters (103, 105) unabhängig voneinander und als rotierende Antriebseinrichtungen ausgebildet sind;

g) einem Mechanismus zum Umwandeln einer rotierenden Bewegung in eine geradlinige Hin- und Herbewegung, der eine Lineare Hin- und Herbewegung des Spulenschiebers (101) und des Klingenhalters (103, 105) veranlaßt;

h) mehreren Backenführungen (131), von denen eine für jede der Klingen (104, 106) zum Halten der Klingen (104, 106) vorgesehen ist, wobei die Backenführungen (131) die Klingen (104, 106) umgeben;

i) einem Gehäuse (135) zur Aufnahme der Spulen (129), das so angeordnet ist, daß es sich um die Backenführungen (131) anschmiegt; und

j) einer Antriebseinrichtung zum Antreiben des Gehäuses (135) in axialer Richtung der Klingenhalter (103, 105);

k) wobei das Gehäuse (135) zum Zeitpunkt, wenn etwa die Hälfte jeder der Spulen (129) in jeden der Schlitze des Statorkernes (130) eingezogen ist, schneller nach oben bewegt wird als der Spulenschieber (101).

**Patentansprüche für den Vertragsstaat: FR**

1. Spulen-Einziehvorrichtung (K, K') zum Einziehen von Spulen (129) in Schlitze eines Statorkernes (130) einer rotierenden, elektrischen Maschine, mit:

a) mehreren zum Einführen der Spulen (129) in die Schlitze dienenden Gruppen von Klingen (104, 106), die kreisförmig angeordnet sind, so daß jede Klinge in einem vorbestimmten Abstand zu benachbarten Klingen angeordnet ist;

b) mehreren Klingenhaltern (103, 105), von denen einer für jede der Klingengruppen (104, 106) vorgesehen ist, wobei jede Klingengruppe in axialer Richtung der Klingenhalter (103, 105) beweglich ist;

c) einem in axialer Richtung der Klingenhalter (103, 105) beweglichen Spulenschieber (101), der die Spulen (129) in die Schlitze so einschiebt, daß der Spulenschieber (101) durch die Klingengruppen (104, 106) geführt wird;

d) einer Antriebseinrichtung zum Antreiben des Spulenschiebers (101) und der Klingenhalter (103, 105); dadurch gekennzeichnet, daß

e) die Klingengruppen (104, 106) unabhängig voneinander beweglich sind;

f) die Antriebseinrichtung des Spulenschiebers (101) und des Klingenhalters (103, 105) unabhängig voneinander und als rotierende Antriebseinrichtungen ausgebildet sind;

g) ein Mechanismus zum Umwandeln einer rotierenden Bewegung in eine geradlinige Hin- und Herbewegung vorgesehen ist, der eine lineare Hin- und Herbewegung des Spulenschiebers (101) und des Klingenhalters (103, 105) veranlaßt.

2. Spulen-Einziehvorrichtung nach Anspruch 1, dadurch gekennzeichnet, daß

a) die mehreren Klingenhalter (103, 105) sich aus einem ersten Klingenhalter (103) für die erste Gruppe von Klingen (104) und einen zweiten Klingenhalter (105) für die zweite Gruppe von Klingen (106) zusammensetzt, wobei der erste Klingenhalter (103) oberhalb des zweiten Klingenhalters (105) angeordnet ist;

b) eine Antriebswelle (102) mit dem Spulenschieber (101) verbunden ist;

c) eine erste hohle Antriebswelle (107) für den ersten Klingenhalter (103) die Antriebswelle (102) koaxial umgibt;

d) eine zweite hohle Antriebswelle (108) für den zweiten Klingenhalter (105) die erste hohle Abtriebswelle (107) koaxial umgibt;

e) der zweite Klingenhalter (105) mit einer Bohrung versehen ist, die nur den Durchtritt der ersten hohlen Antriebswelle (107) gestattet;

f) der erste Klingenhalter (103) mit einer Bohrung versehen ist, die nur die Antriebswelle (102) hindurchtreten läßt;

wobei der Spulenschieber (101), der erste Klingenhalter (103) und der zweite Klingenhalter (105) mittels der Antriebswelle (102) der ersten hohlen Antriebswelle (107) bzw. der zweiten hohlen Antriebswelle (108) nach oben gestoßen werden im Falle des Anhebens und mittels des Spulenschiebers (101) nach unten gedrückt werden im Falle des Absenkens.

3. Spulen-Einziehzorrichtung nach Anspruch 1 oder 2, gekennzeichnet durch

a) mehrere Backenführungen (131), von denen einer für jede der Klingen (104, 106) zum Halten der Klingen (104, 106) vorgesehen ist und die Klingen (104, 106) umgeben;

b) ein Gehäuse (135) zur Aufnahme der Spulen (129), das so angeordnet ist, daß es sich um die Backenführungen (131) anschmiegt;

c) eine Antriebseinrichtung zum Antreiben des Gehäuses (135) in axialer Richtung der Klingenhalter (103, 105);

d) wobei das Gehäuse (135) zum Zeitpunkt, wenn etwa die Hälfte jeder der Spulen (129) in jeden der Schlitze des Statorkernes (130) eingezogen ist, schneller nach oben bewegt wird als der Spulenschieber (101).

**Revendication pour les Etats Contractants: DE, GB**

Appareil (K, K') d'insertion d'enroulements (129) dans des fentes d'un corps de stator (130) d'une machine électrique rotative, comprenant:

a) plusieurs groupes de lames (104, 106) destinées à guider les enroulements (129) dans les fentes, les lames formant un arrangement circulaire dans lequel chaque lame est séparée des lames adjacentes par une distance prédéterminée,

b) plusieurs supports (103, 105) de lames, un par groupe de lames (104, 106), chaque groupe de lames étant mobile suivant l'axe des supports de lames (103, 105),

c) un organe (101) de poussée d'enroulements, destiné à se déplacer dans la direction de l'axe des supports de lames (103, 105) afin que les enroulements (129) soient déplacés dans les fentes, si bien que l'organe (101) de poussée est guidé par les groupes de lames (104, 106),

d) des dispositifs d'entraînement de l'organe de poussée (101) et des supports de lames (103, 105),

e) les groupes de lames (104, 106) sont mobiles indépendamment les uns des autres,

f) les dispositifs d'entraînement de l'organe de poussée (101) et des supports de lames (103, 105) sont indépendants et sont des dispositifs d'entraînement en rotation,

g) un mécanisme est destiné à transformer un mouvement de rotation en un mouvement linéaire alternatif, ce mécanisme provoquant des déplacements linéaires alternatifs de l'organe de poussée (101) et des supports de lames (103, 105),

h) plusieurs guides (131) en forme de coins, à raison d'un par lame (104, 106), destinés à maintenir les lames (104, 106), entourent les lames (104, 106),

i) un boîtier (135) destiné à loger les enroulements (129) est ajusté autour des guides (131) en forme de coins,

j) un dispositif d'entraînement est destiné à entraîner le boîtier (135) dans la direction de l'axe des supports de lames (103, 105), et

k) le boîtier (135) est déplacé vers le haut plus vite que l'ogane de poussé (101) au moment où la moitié environ de chaque enroulement (129) est insérée dans chaque fente du corps de stator (130).

**Revendications pour L'Etat Contractant: FR**

1. Appareil (K, K') d'insertion d'enroulements (129) dans des fentes d'un corps de stator (130) d'une machine électrique rotative, comprenant:

a) plusieurs groupes de lames (104, 106) destinées à guider les enroulements (129) dans les fentes, les lames formant un arrangement circulaire dans lequel chaque lame est séparée des lames adjacentes par une distance prédéterminée,

b) plusieurs supports (103, 105) de lames, un par groupe de lames (104, 106), chaque groupe de lames étant mobile suivant l'axe des supports de lames (103, 105),

c) un organe (101) de poussée d'enroulements, destiné à se déplacer dans la direction de l'axe des supports de lames (103, 105) afin que les enroulements (129) soient déplacés dans les fentes si bien que l'organe (101) de poussée est guidé par les groupes de lames (104, 106),

d) des dispositifs d'entraînement de l'organe de poussée (101) et des supports de lames (103, 105), caractérisé en ce que:

e) les groupes de lames (104, 106) sont mobiles indépendamment les uns des autres,

f) les dispositifs d'entraînement de l'organe de poussée (101) et des supports de lames (103, 105) sont indépendants en sont des dispositifs d'entraînement en rotation, et

g) un mécanisme est destiné à transformer un mouvement de rotation en un mouvement linéaire alternatif, ce mécanisme provoquant des déplacements linéaires alternatifs de l'organe de poussée (101) et des supports de lames (103, 105).

2. Appareil d'insertion d'enroulements selon la revendication 1, caractérisé en ce que:

a) les supports de lames (103, 105) forment un premier support (103) du premier groupe de lames (104) et un second support (105) du second groupe de lames (106), le premier support (103) étant placé au-dessus du second (105),

b) un arbre d'entraînement (102) couplé à l'organe de poussée (101),

c) un premier arbre creux (107) d'entraînement du premier support (103) de lames entoure coaxialement l'arbre d'entraînement (102),

d) un second arbre creux d'entraînement (108) du second support de lames (105) entoure coaxialement le premier arbre creux d'entraînement (107),

e) le second support de lames (105) a un trou permettant le passage uniquement du premier arbre creux d'entraînement (107),

f) le premier support de lames (103) a un trou qui permet le passage uniquement de l'arbre d'entraînement (102),

si bien que l'organe de poussée (101), le premier support (103) et le second support (105) sont repoussés vers le haut per l'arbre d'entraînement (102), le premier arbre creux (107) et le second arbre creux (108) respectivement lors de leur soulèvement, et sont abaissés par l'organe de poussée (101) lors de leur abaissement.

3. Appareil d'insertion d'enroulements selon l'une des revendications 1 et 2, caractérisé en ce que:

a) plusieurs guides (131) en forme de coins, à raison d'un par lame (104, 106), destinés à maintenir les lames (104, 106), entourent les lames (104, 106),

b) un boîtier (135) destiné à loger les enroulements (129) est ajusté autour des guides (131) en forme de coins,

c) un dispositif est destiné à entraîner le boîtier (135) dans la direction de l'axe des supports de lames (103, 105), et

d) le boîtier (135) est déplacé vers le haut plus vite que l'organe de poussée (101) au moment où la moitié environ de chaque enroulement (129) est inserée dans chaque fente du corps de stator (130).

Fig. 1   PRIOR ART

Fig. 2 PRIOR ART

Fig. 3 PRIOR ART

1

Fig. 4

Fig. 5

Fig. 6

*Fig. 7*

Fig. 8